Europäisches Patentamt

(19) European Patent Office

Office européen des brevets

(11) Veröffentlichungsnummer: **0 186 729**
**B1**

(12) EUROPÄISCHE PATENTSCHRIFT

(45) Veröffentlichungstag der Patentschrifft:
28.02.90

(51) Int. Cl.⁵: **B 29 C 51/42**, B 65 B 47/02

(21) Anmeldenummer: 85109408.6

(22) Anmeldetag: 26.07.85

(54) Verpackungsmaschine.

(30) Priorität: 20.12.84 DE 3446650

(43) Veröffentlichungstag der Anmeldung:
09.07.86 Patentblatt 86/28

(45) Bekanntmachung des Hinweises auf die Patenterteilung:
28.02.90 Patentblatt 90/09

(84) Bennante Vertragsstaaten:
BE CH DE FR GB IT LI SE

(56) Entgegenhaltungen:
FR-A-2 116 487
FR-A-2 134 283
FR-A-2 458 376
GB-A-1 189 688
GB-A-2 085 798
US-A-3 737 494
US-A-4 127 631

PLASTVERARBEITER, Band 29, Nr. 6, Juni 1978,
Seiten 305-310, Speyer/Rhein, DE; O. LAMBLIN:
"Tiefziehen von Polypropylen"

(73) Patentinhaber: MULTIVAC SEPP HAGGENMÜLLER KG
Bahnhofstrasse 4
D-8941 Wolfertschwenden (DE)

(72) Erfinder: Natterer, Johann
Römerweg 9
D-8945 Legau (DE)

(74) Vertreter: Prüfer, Lutz H., Dipl.-Phys.
Harthauser Strasse 25d
D-8000 München 90 (DE)

**Beschreibung**

Die Erfindung betrifft eine Verpackungsmaschine nach dem Oberbegriff des Anspruches 1 sowie ein Verfahren zum Verformen von Kunststoffolie zu offenen Behältern nach dem Oberbegriff des Anspruches 8.

Die verwendeten Folien, insbesondere Polypropylen-Folien und Polyester-Folien werden zum Zwecke des Verformens vorerwärmt. Bei Polypropylen-Folien liegen je nach Herstellungsprozeß mehr oder weniger stark ausgeprägte Kristallstrukturen vor, die beim Thermoformen durch Erwärmen möglichst vollständig in eine amorphe Form umzuwandeln sind. Nur bei weitgehend vollständiger Umwandlung erhält der daraus geformte Becher eine thermische Beständigkeit, die eine nachfolgende Behandlung des zu verpackenden Produktes im Autoklaven bei Temperaturen bis 120°C möglich macht. Wie aus Saechtling, Kunststoff-Taschenbuch, S. 165 - 167, bekannt ist, liegt diese als "Kristall-Schmelzbereich" bezeichnete Temperatur bei 155°C. Bei dieser Temperatur (Schmelztemperatur) beginnt das Material aber bereits zu schmelzen und nimmt an Viskosität und Festigkeit sehr stark ab. Für die Verformung reicht eine wesentlich niedrigere Temperatur, die je nach Ausgangsmaterial bei 130 - 140°C liegt. Bei dieser Temperatur hat die Folie eine ausreichende Festigkeit und kann von der Kontaktheizplatte noch abgelöst und in die Formstation transportiert werden. Vorzugsweise wird die Verformungstemperatur möglichst hoch gewählt und liegt für Polypropylen bei 150°C. Polyester-Folie (PET) liegt zur Verarbeitung in amorpher Form vor. Die Erweichungstemperatur für das Verformen liegt bei über 120°C und vorzugsweise bei 140 - 150°C. Bei einer Erwärmung auf eine Temperatur von etwa 170 - 200°C erfolgt eine gegen Warmverformung irreversible verfestigende Kristallisation. Dieser letzte Temperaturbereich wird im weiteren für Polyester als Kristallisationstemperatur bezeichnet.

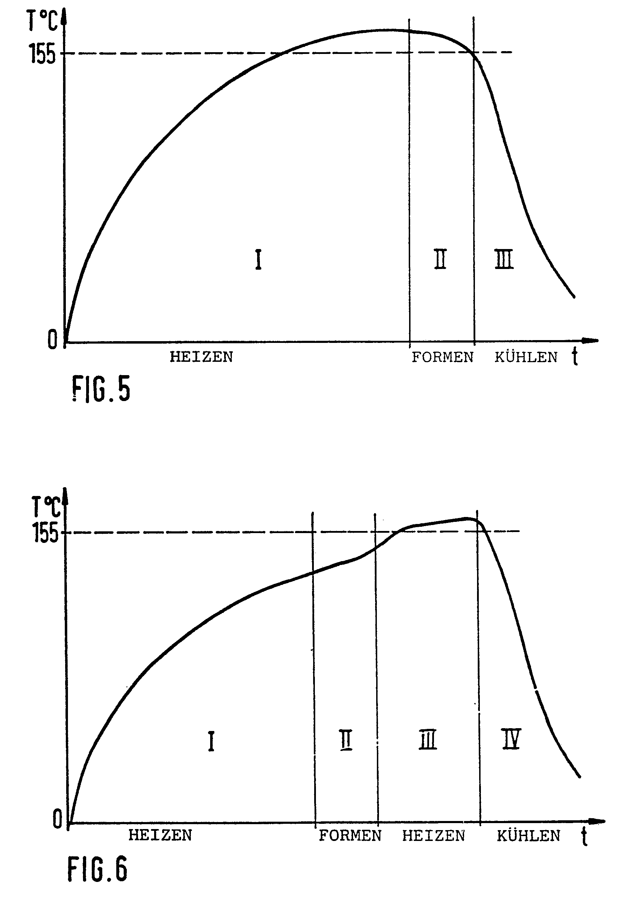

Eine Vorrichtung und ein Verfahren der eingangs beschriebenen Art ist aus der DE-OS-3 109 814 bekannt. Zum Verformen wird die Folie auf eine Temperatur erwärmt, bei der sie verformbar ist. Diese Temperatur liegt bei Polypropylen unter der Schmelztemperatur und bei Polyester unter der Kristallisationstemperatur, damit die Folie nicht mit der Erwärmungseinrichtung verklebt und damit sie beim Weitertransport von der Erwärmungseinrichtung zu der eigentlichen Verformungseinrichtung nicht ihre Stabilität verliert. Die Folie wird bei der bekannten Vorrichtung nach Erwärmen seitlich eingespannt und mit einem Formstempel, der als Vorstreckstempel ausgebildet ist, und noch nicht die endgültige Form besitzt, verformt. Die Temperatur des Formstempels liegt unterhalb der Folientemperatur und somit der Verformungstemperatur. Es ist eine Matrize vorgesehen, die so ausgebildet ist, daß die Folie bei Endstellung des Stempels nahezu an der Matrize anliegt. Die Matrize weist Bohrungen auf, die mit einer Evakuiereinrichtung in Verbindung stehen, so daß die Folie an die Wandungen der Matrize ansaugbar ist und ihre endgültige Form annimmt. Durch Anlegen an der Matrize kühlt die Folie sich ab. Es tritt dabei das Problem auf, daß die verformten Folienbereiche dazu neigen, ihre Form insbesondere bei Wärmeeinwirkung beispielsweise beim Einfüllen eines heißen Produktes wenigstens teilweise wieder zu ändern. Wie in Fig. 5 am Beispiel für Polypropylen dargestellt, erfolgt das Erwärmen der Folie im Abschnitt I während des Anliegens an der Heizplatte. Anschließend erfolgt im Abschnitt II die Verformung, wobei die Folie sich bereits abkühlt. Im anschließenden Abschnitt III findet eine weitere Abkühlung statt.

Aus der GB-A-2 085 798 ist ein Verfahren zum Tiefziehen von Behältern bekannt. Bei diesem Verfahren wird durch Spritzgießen eine besonders geformte Platte vorbereitet. Die Platte wird auf eine Temperatur, die im wesentlichen der Verformungstemperatur entspricht, erwärmt. Die Platte wird über eine Kammer gebracht und durch einen Stempel, der ebenfalls eine Temperatur aufweist, die im wesentlichen der Verformungstemperatur entspricht, langsam zu einem Behälter geformt. Daran anschließend wird die Temperatur des Stempels so weit erhöht, daß eine rasche Kristallisation des verformten Materials stattfindet. Schließlich wird der Behälter wieder abgekühlt auf eine Temperatur unterhalb der Verformungstemperatur. Zum Schluß wird der Behälter aus der Kammer entfernt.

Aufgabe der Erfindung ist es, eine Vorrichtung und ein Verfahren der oben beschriebenen Art so auszubilden, daß die damit geformten Behälter bei einer Erwärmung der Behälter im Gebrauch möglichst keine Rückverformung erfahren.

Diese Aufgabe wird durch eine Verpackungsmaschine der eingangs beschriebenen Art gelöst, die durch die Merkmale des Anspruches 1 gekennzeichnet ist.

Das Verfahren zum Verformen von Kunststoffolie ist durch die Merkmale des Anspruches 8 gekennzeichnet.

Im weiteren wird die Erfindung anhand von Ausführungsbeispielen unter Bezugnahme auf die Figuren beschrieben. Von den Figuren zeigen:

Fig. 1    eine Seitenansicht einer Verpackungsmaschine mit weggelassener Seitenwand;

Fig. 2    einen Schnitt durch die Formstation, wobei die Schnittebene in der Vorschubrichtung der Folienbahn und parallel zu der Darstellungsebene in Figur 1 liegt;

Fig. 3    den der Figur 2 entsprechenden Schnitt in einer anderen Arbeitsstellung;

Fig. 4    den der Figur 2 entsprechenden Schnitt in einer dritten Arbeitsstellung;

Fig. 5    ein Temperaturdiagramm für die Verformung von Polypropylen in bekannter Weise; und

Fig. 6    ein entsprechendes Diagramm mit einem erfindungsgemäßen Temperaturverlauf.

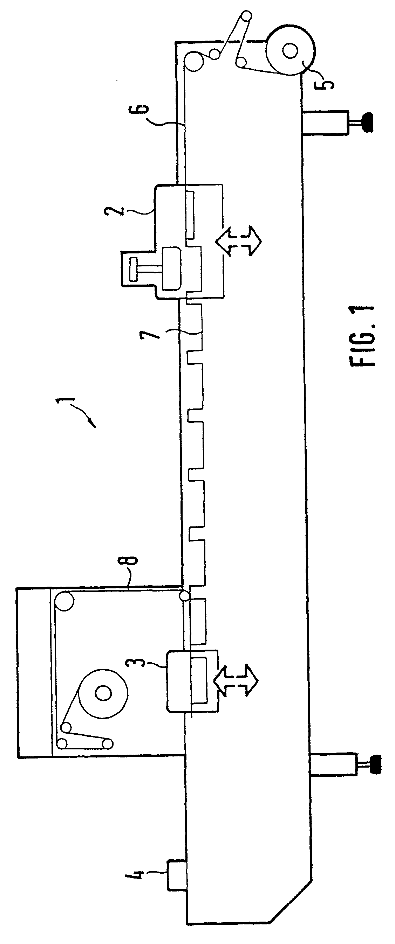

In Figur 1 ist eine Verpackungsmaschine 1 schematisch dargestellt, die in bekannter Weise nacheinander eine Formstation 2, eine Versiegelungsstation 3 und eine Trennstation 4 aufweist, die jeweils an einem Rahmen der Maschine befestigt sind. In der Formstation 2 werden aus einer von einer Rolle 5 her abgezogenen Folienbahn 6 Behälter 7 geformt. Diese werden dann gefüllt und mit einer Oberfolienbahn 8 abgedeckt und in der Versiegelungsstation 3 verschlossen. In der Trennstation werden die einzelnen aneinanderhängenden Packungen dann voneinander getrennt.

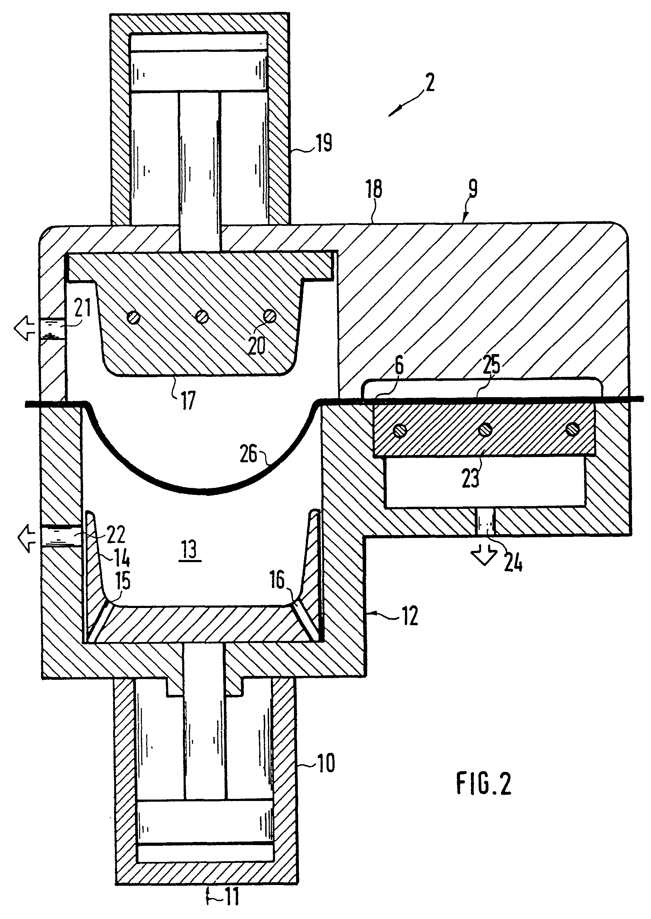

In den Figuren 2 bis 4 ist die in Figur 1 nur schematisch angedeutete Formstation 2 im Schnitt gezeigt. Diese weist ein mit dem Maschinenrahmen fest verbundenes Oberteil 9 und ein relativ zum Oberteil 9 in Richtung des Pfeiles 11 auf- und abwärts bewegbares Unterteil 12 auf.

Das Unterteil 12 weist einen Innenraum 13 auf, in den eine der gewünschten Form in ihrer Kontur und Größe angepaßte Matrize 14 eingesetzt ist. Diese weist in ihren Randbereichen und Ecken Bohrungen 15, 16 auf, die zum Verbinden des Matrizeninneren mit einer Evakuierleitung vorgesehen sind.

Das Oberteil 9 weist eine der Form des zu formenden Behälters entsprechende Patrize 17 auf, die über eine an dem Gehäuse 18 des Oberteiles 9 befestigte Kolben-Zylinder-Einrichtung 19 in den Innenraum 13 des Unterteiles 12 hinein und aus diesem in eine zurückgezogene Stellung heraus auf- und abbewegbar ist. Die Patrize 17 ist aus einem gut wärmeleitenden Material, beispielsweise Aluminium, gefertigt. Sie ist mit einer Heizeinrichtung 20, deren Temperatur in bekannter Weise über eine Regeleinrichtung einstellbar ist, versehen. Die Heizeinrichtung 20 kann beispielsweise durch in der Zeichnung angedeutete Heizschlangen realisiert sein.

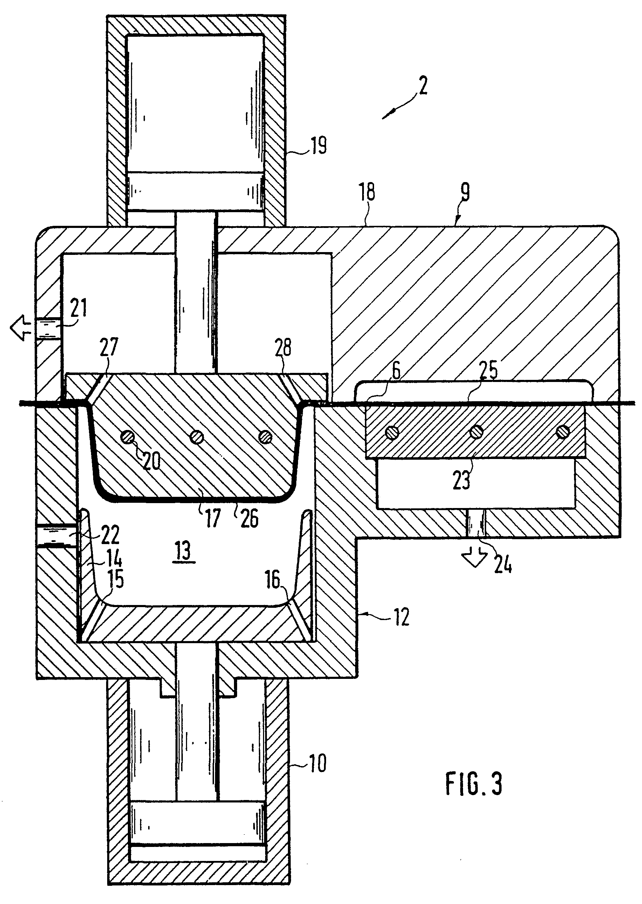

Das Oberteil weist, wie in Figur 3 dargestellt, in seinen Randbereichen und Ecken Bohrungen 27, 28 auf, die zum Verbinden mit einer Evakuierleitung vorgesehen sind.

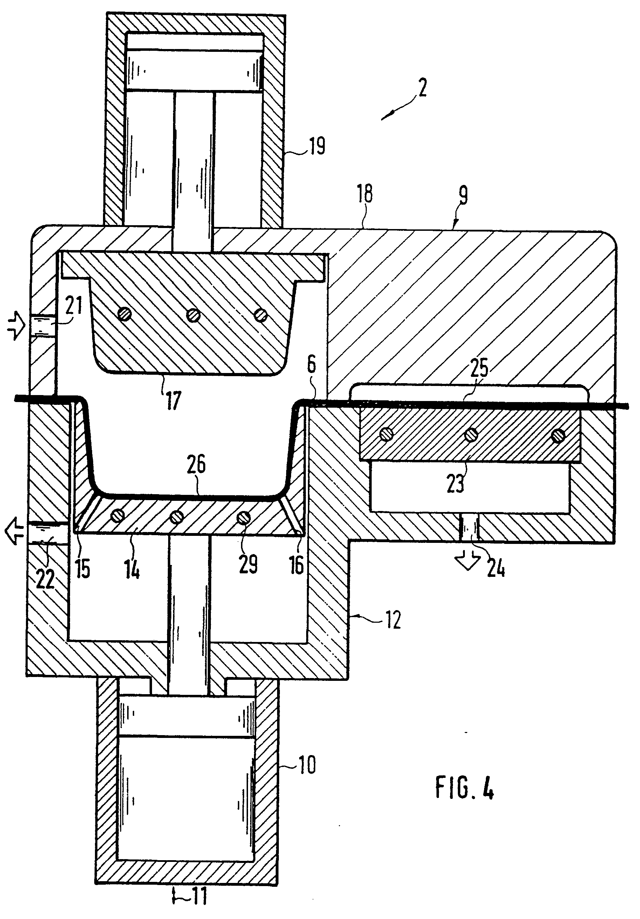

Im Oberteil 9 ist eine wahlweise mit einer Druckluftquelle bzw. Evakuiereinrichtung verbindbare Öffnung 21 vorgesehen. Im Unterteil 12 ist eine entsprechende wahlweise mit einer Druckluftquelle oder einer Evakuiereinrichtung verbindbare Öffnung 22 vorgesehen. Wie am besten aus den Figuren 2 und 3 ersichtlich ist, ist die Öffnung 22 so angeordnet, daß sie in zurückgezogener Stellung der Matrize mit dem Innenraum 13 direkt in Verbindung steht. Ist die Matrize dagegen in die in Figur 4 gezeigte angehobene Stellung bewegt, dann stehen die Bohrungen 15, 16 mit der Öffnung 22 in Verbindung so daß über die Bohrungen 15, 16 bei Verbinden mit einer Evakuiereinrichtung ein Unterdruck angreift.

Eine Taktlänge vor der beschriebenen Einrichtung aus Patrize und Matrize ist eine Heizeinrichtung 23 in Form einer Heizplatte vorgesehen, die auf eine vorgewählte Temperatur aufheizbar ist. Die Heizplatte ist in dem gezeigten Ausführungsbeispiel mit dem Unterteil 12 der Formstation verbunden. Die Unterseite der Heizplatte ist vorzugsweise über eine Öffnung 24 mit einer Druckluft- bzw. Evakuiereinrichtung wahlweise verbindbar. Die Unterseite steht über nicht gezeigte Bohrungen mit ihrer Oberfläche in Verbindung.

Im Betrieb befinden sich die Patrize 17 und die Matrize 14 in der in Figur 2 gezeigten zurückgezogenen Stellung. Die Folie 6 ist an ihren Rändern zwischen Oberteil und Unterteil eingeklemmt. Ein Folienabschnitt 25 liegt auf der Oberfläche der Heizplatte 23 auf und wird dort auf die Verformungstemperatur erwärmt. Die Verformungstemperatur ist von Folientyp zu Folientyp unterschiedlich. Der Begriff wird hier für eine Temperatur verwendet, die unterhalb der Schmelztemperatur bzw. im Fall von Folien des Polyester-Types unter der Kristallisationstemperatur liegt. Für Polypropylenfolie beträgt die Verformungstemperatur beispielsweise 150°C, während die Schmelztemperatur wenigstens 155°C beträgt.

Für Polyesterfolie beträgt die Verformungstemperatur über 120°C und vorzugsweise 140 - 150°C, während die Kristallisationstemperatur den Temperaturbereich von ca. 170°C bis ca. 200°C umfaßt. Gleichzeitig befindet sich der in dem vorhergehenden Arbeitstakt auf der Heizplatte liegende Folienabschnitt 26 zwischen der Patrize 17 und der Matrize 14 an seinen Seitenrändern eingespannt. Da die Erwärmung der Folie im vorhergehenden Abschnitt nur bis zur Verformungstemperatur erfolgt ist, weist die Folie eine ausreichende Stabilität auf und ist zunächst noch mehr oder weniger eben.

Nach dem Einspannen wird in der in Figur 2 gezeigten Weise durch Verbinden der Öffnung 22 mit Vakuum eine Druckdifferenz auf den beiden Seiten des Folienabschnittes 26 erzeugt, die zur Folge hat, daß sich die Folie in der in Figur 2 gezeigten Weise gleichmäßig zur Matrize hin streckt. Diese Streckung der Folie erfolgt in einem solchen Ausmaß, daß die Oberfläche der Folie auf jeden Fall nicht größer ist als die wirksame Oberfläche der Patrize 17.

Im nächsten Arbeitszyklus wird die Patrize 17 aus ihrer zurückgezogenen Stellung gegen die Folie so lange nach unten bewegt, bis sie die in Figur 3 gezeigte Endstellung erreicht. Gleichzeitig ist die Öffnung 22 mit Atmosphäre verbunden, während die Öffnung 21 mit der Evakuiereinrichtung verbunden ist. Über die Bohrungen 27, 28 wird dadurch die Folie vollständig an die Form der Patrize 17 angelegt, wie in Figur 3 gezeigt ist.

Die Temperatur der Patrize 17 ist in Abhängigkeit von der Taktgeschwindigkeit der Maschine so geregelt, daß die an der Patrize anliegende Folie durch Wärmeübertragung auf eine Temperatur wenigstens gleich der Schmelztemperatur bzw. der Kristallisationstemperatur im Fall der Polyester-Typ-Folie erwärmt wird. Sobald die Folie in der in Figur 3 gezeigten Weise an der Patrize anliegt, wird daher Wärme auf die anliegende Folie übertragen und diese auf eine Temperatur erwärmt, die wenigstens gleich der Schmelz- bzw. Kristallisationstemperatur ist.

Im nächsten Arbeitstakt wird die Matrize 14 mit Hilfe der Kolben-Zylinder-Einrichtung 10 in die angehobene Stellung bewegt. Dabei ist die angehobene Stellung so gewählt, daß zwischen der an der Patrize 17 anliegenden Folie und der Matrizenoberfläche ein kleiner Spalt von beispielsweise einem Millimeter verbleibt. Sobald die Folie die gewünschte Temperatur erreicht hat, wird eine Umkehr der auf die Folie wirkenden Druckdifferenz dadurch erzeugt, daß die Öffnung 21 mit Druckluft und die Öffnung 22 mit der Evakuiereinrichtung verbunden werden. Auf diese Weise legt sich die verformte und erwärmte Folie 26 an die kalte Matrize 14 an und gibt ihre Wärme an diese ab. Die Matrize kann in üblicher Weise eine schematisch angedeutete Kühleinrichtung 29 aufweisen und ist vorzugsweise auf eine Temperatur von etwa 10°C bis Raumtemperatur herabgekühlt. Gleichzeitig mit dem Abkühlvorgang wird die Patrize 17 in ihre in Figur 4 gezeigte zurückgezogene Stellung bewegt.

Im nächsten Arbeitstakt wird das Unterteil 12 abgesenkt und die Folie 6 um einen Arbeitstakt so weiter bewegt, daß der jetzt auf seine Verformungstemperatur vorgewärmte Abschnitt 25 zwischen Patrize und Matrize zu liegen kommt.

Wie in Figur 6 am Beispiel der Polypropylenfolie gezeigt ist, wird die zu verformende Folie also zunächst im Abschnitt I an der Heizplatte auf ihre Verformungstemperatur vorerwärmt. Bei dieser Temperatur hat sie noch genügend Festigkeit, um sich einwandfrei von der Kontaktheizplatte zu lösen und in die Formstation transportiert zu werden. Am Anfang von Abschnitt II wird die Folie zunächst in der Formstation durch Anlegen eines Druckunterschiedes vorgestreckt. Durch die Vorstreckung wird eine gleichmäßige Materialverteilung erreicht, was zu gleichmäßigeren Wanddicken führt als ohne eine solche Vorstreckung. Anschließend wird die Folie durch Einwirken der Patrize mechanisch verformt und erwärmt. Die Taktgeschwindigkeit ist so eingestellt, daß die Folie im Abschnitt III genau so lange an der Patrize anliegen bleibt, bis sie durch Wärmeübertragung die Schmelztemperatur erreicht hat. Dann erfolgt eine Umkristallisation, die nach dem Abkühlen die Stabilität gibt. In dem nachfolgenden Takt IV wird die Folie an die kalte Matrize so lange angelegt, bis die Temperatur soweit herabgesetzt wird, daß die Behälterteile eine ausreichende Standfestigkeit und Temperaturstabilität haben und in die Füllstation weiterbewegt und dort befüllt werden können.

## Patentansprüche

1. Verpackungsmaschine mit einer Formstation und einer in Vorschubrichtung nachfolgend angeordneten Versiegelungsstation, bei der eine Folienbahn in der Formstation zu Behältern verformt und dann in der Versiegelungsstation versiegelt wird, wobei die Formstation eine Heizeinrichtung (23) zum Erwärmen der Folie auf eine unterhalb der Schmelz- bzw. Kristallisationstemperatur der Folie liegende Verformungstemperatur und in Vorschubrichtung nachfolgend eine Formeinrichtung aufweist, wobei die Formstation (2) ein Oberteil (9) und ein relativ dazu bewegbares Unterteil (12), einen gegen die Folie (6) bewegbaren Formstempel und eine Verbindung mit einer Vakuumquelle zum Erzeugen einer Druckdifferenz zwischen den beiden Seiten der zum Verformen in der Station (2) befindlichen Folie (6) aufweist, dadurch gekennzeichnet, daß der Formstempel als Patrize mit einer Heizeinrichtung ausgebildet ist und eine die Temperatur der Patrize während des Formens auf eine Temperatur oberhalb der Verformungstemperatur der Folie (6) regelnde Regeleinrichtung vorgesehen ist.

2. Verpackungsmaschine nach Anspruch 1, dadurch gekennzeichnet, daß der Formstempel auf eine Temperatur aufheizbar ist, die wenigstens gleich der Schmelz- bzw. Kristallisationstemperatur der Folie ist.

3. Verpackungsmaschine nach Anspruch 1 oder 2, dadurch gekennzeichnet, daß die Temperatur in Abhängigkeit von der Taktgeschwindigkeit so gewählt wird, daß die Folie durch Wärmeübertragung auf eine Temperatur wenigstens gleich der Schmelz- bzw. Kristallisationstemperatur erwärmt wird.

4. Verpackungsmaschine nach einem der Ansprüche 1 bis 3, dadurch gekennzeichnet, daß eine der endgültigen Form entsprechende Matrize (14) in dem anderen Teil relativ zu der Folie (6) bewegbar angeordnet ist.

5. Verpackungsmaschine nach Anspruch 4, dadurch gekennzeichnet, daß die Matrize (14) in ihrem zu der Folie (6) hin in Arbeitsstellung ausgefahrenen Zustand einen spaltförmigen Abstand von der an dem Formstempel (17) anliegenden Folie (6) aufweist.

6. Verpackungsmaschine nach Anspruch 4 oder 5, dadurch gekennzeichnet, daß die Matrize (14) im Betrieb eine wesentlich unter der Verformungstemperatur liegende Temperatur aufweist.

7. Verpackungsmaschine nach Anspruch 6, dadurch gekennzeichnet, daß die Matrize (14) eine Einrichtung (29) zur Wärmeableitung aufweist.

8. Verfahren zum Verformen von Kunststoffolie (6) zu offenen Behältern, bei dem die Folie (6) auf ihre Verformungstemperatur vorerwärmt und danach an ihren Seiten eingespannt und durch Einwirken einer Druckdifferenz verformt wird, dadurch gekennzeichnet, daß die eingespannte Folie durch Kontakt mit einer während des Verformens auf einer Temperatur oberhalb der Verformungstemperatur gehaltenen Patrize auf eine Temperatur oberhalb der Verformungstemperatur erwärmt wird.

9. Verfahren nach Anspruch 8, dadurch gekennzeichnet, daß die verformte Folie (6) nach der Erwärmung an eine wesentlich unter der Verformungstemperatur liegende Wandung geführt wird.

**Claims**

1. Packaging machine having a shaping station and a sealing station arranged downstream in the direction of feed, in which a foil sheet is shaped into containers in the shaping station and is then sealed in the sealing station, the shaping station having a heating apparatus (23) for warming the foil to a shaping temperature below the melting or crystallization point of the foil and a shaping apparatus downstream in the direction of feed, the shaping station (2) having an upper part (9) and a lower part (12) movable in relation thereto, a shaping die movable towards the foil (6) and a connection to a vacuum source for generating a pressure difference between the two sides of the foil (6) which is in the station (2) for shaping, characterized in that the shaping die is constructed as a male mould having a heating apparatus, and a regulating apparatus regulating the temperature of the male mould during shaping to a temperature above the shaping temperature of the foil (6) is provided.

2. Packaging machine according to Claim 1, characterized in that the shaping die is heatable up to a temperature which is at least equal to the melting or crystallization point of the foil.

3. Packaging machine according to Claim 1 or 2, characterized in that the temperature is chosen in dependence on the cycle rate such that the foil is warmed by heat transfer to a temperature which is at least equal to the melting or crystallization point.

4. Packaging machine according to one of Claims 1 to 3, characterized in that a female mould (14) corresponding to the final shape is arranged in the other part movably in relation to the foil (6).

5. Packaging machine according to Claim 4, characterized in that the female mould (14), in its state extended towards the foil (6) in the operating position, is at a slit-like spacing from the foil (6) bearing against the shaping die (17).

6. Packaging machine according to Claim 4 or 5, characterized in that in operation the female mould (14) is at a temperature substantially below the shaping temperature.

7. Packaging machine according to Claim 6, characterized in that the female mould (14) has an apparatus (29) for heat dissipation.

8. Process for shaping plastics foil (6) into open containers, in which the foil (6) is pre-warmed to its shaping temperature and is then clamped at its sides and shaped by application of a pressure difference, characterized in that the clamped foil is warmed to a temperature above the shaping temperature by contact with a male mould which is kept at a temperature above the shaping temperature during shaping.

9. Process according to Claim 8, characterized in that, after warming, the shaped foil (6) is guided to a wall which is substantially below the shaping temperature.

**Revendications**

1. Machine d'emballage, comportant un poste de façonnage et un poste de scellement disposé en aval, dans le sens d'avancement, dans laquelle une bande de pellicule est déformée dans le poste de façonnage en des contenants et qui est ensuite scellée dans le poste de scellement, la station de façonnage comportant un dispositif chauffant (23) destiné à chauffer la pellicule à une température de déformation située au-dessous de la température de fusion ou de cristallisation de la pellicule, et un dispositif de façonnage situé en aval, le poste de façonnage (2) comportant une partie supérieure (9) et une partie inférieure (12) pouvant se déplacer par rapport à la première, une étampe de façonnage pouvant se déplacer contre la pellicule et une connexion avec une source de vide pour créer une différence de pression entre les deux côtés de la pellicule (6) à déformer, située dans le poste (2), caractérisée en ce que l'étampe de façonnage est formée comme un poinçon comportant un dispositif chauffant et en ce qu'il est prévu un dispositif régulateur destiné à régler la température du poinçon pendant le façonnage de sorte qu'elle soit supérieure à la température de déformation de la pellicule (6).

2. Machine d'emballage selon la revendication 1, caractérisée en ce que l'étampe de façonnage peut être chauffée à une température qui est au moins égale à la température de fusion ou de cristallisation de la pellicule.

3. Machine d'emballage selon l'une quelconque des revendications 1 à 2, caractérisée en ce que la température est choisie en fonction de la vitesse des cycles opératoires de telle manière, que la pellicule est chauffée, par transfert thermique, à une température qui est au moins égale à la température de fusion ou de cristallisation.

4. Machine d'emballage selon l'une quelconque des revendications 1 à 3, caractérisée en ce qu'une matrice (14) correspondant à la forme définitive est disposée dans l'autre partie et pouvant se déplacer par rapport à la pellicule (6).

5. Machine d'emballage selon la revendication 4, caractérisée en ce que la matrice (14) présente, lorsqu'elle est en position de travail avancée vers la pellicule (6), un intervalle formant un interstice vis-a-vis de la pellicule (6) disposée sur l'étampe de façonnage (17).

6. Machine d'emballage selon l'une quelconque des revendications 4 et 5, caractérisée en ce que la matrice (14) présente à l'état de fonctionnement une température nettement inférieure à la température de déformation.

7. Machine d'emballage selon la revendication 6, caractérisée en ce que la matrice (14) présente un dispositif (29) de dissipation de chaleur.

8. Procédé de déformation d'une pellicule en matière plastique en des contenants ouverts, dans lequel la pellicule (6) est préchauffée à sa température de déformation, puis encastrée par ses bords et déformée sous l'effet d'une différence de pression, caractérisé en ce que la pellicule encastrée est chauffée à une température supérieure à la température de déformation par contact avec un poinçon maintenu pendant la déformation à une température supérieure à la température de déformation.

9. Procédé selon la revendication 8, caractérisé en ce que la pellicule déformée (6) est dirigée, après le réchauffage, contre une paroi dont la température est nettement inférieure à la température de déformation.

FIG. 1

EP 0 186 729 B1

FIG.2

EP 0 186 729 B1

FIG.3

FIG. 4

FIG.5

FIG.6

9